# EUROPEAN PATENT APPLICATION

(11) **EP 2 536 092 A1**
(43) Date of publication of application: **19.12.2012**
(21) Application number: 11833821.9
(22) Date of filing: 13.10.2011
(51) Int. Cl.: H04L 29/02

(54) **METHOD AND DEVICE FOR PORT MAPPING, AND COMMUNICATIONS SYSTEM**

(30) Priority: 22.10.2010 CN 201010515706
(71) Applicant: Huawei Technologies Co., Ltd., Shenzhen, Guangdong 518129 (CN)
(72) Inventor: LI, Chenggang, Shenzhen Guangdong 518129 (CN); HU, Shubao, Shenzhen Guangdong 518129 (CN)
(74) Representative: Pfenning, Meinig & Partner GbR
(86) International application number: PCT/CN2011/080755
(87) International publication number: WO 2012/051915

(57) **Abstract**

Embodiments of the present invention disclose a port mapping method and apparatus, and a communication system. The method includes: obtaining static port mapping information that includes a corresponding relationship between a public network port number, a DHCP client identifier, and a private network port number; obtaining a corresponding relationship between the DHCP client identifier and a private network IP address, and a public network IP address of a NAT gateway; and establishing a port mapping relationship according to the obtained public network IP address of the NAT gateway, the corresponding relationship between the DHCP client identifier and the private network IP address, and the static port mapping information; Through the embodiments of the present invention, the manual configuration work in the port mapping relationship can be performed without having to wait until a process of allocating the private network IP address dynamically is completed, the workload of manual configuration and the probability of erroneous or repeated configuration is lowered, and the manual configuration work does not need to be performed again after the private network IP address changes.

## Description

This application claims priority to Chinese Patent Application No. 201010515706.3, filed with the Chinese Patent Office on October 22, 2010 and entitled "PORT MAPPING METHOD and APPARATUS, AND COMMUNICATION SYSTEM", which is hereby incorporated by reference in its entirety.

### FIELD OF THE INVENTION

The present invention relates to the field of communications, and in particular, to a port mapping method and apparatus, and a communication system.

### BACKGROUND OF THE INVENTION

A header of an IP data packet transmitted over the Internet Protocol (Internet Protocol, IP) includes a source IP address and a destination IP address. A technology of rewriting the source IP address and/or the destination IP address in the header of the IP data packet when the IP data packet passes a router or a firewall is known as a network address translation (NAT) technology. Currently, the NAT technology is widely used in private networks, in which multiple hosts access the Internet through a public network IP address. For example, a home network including multiple personal computers (PCs) is a private network. If an operator allocates only one public network IP address to the home network, and all PCs in the home network need to access the resources on the Internet, all the PCs in the home network may be connected to a home router, and the home router allocates a private network IP address to each PC. When each PC accesses the public network through the home router, the home router performs NAT on IP data packets transmitted by each PC accessing the public network.

When a communication device in a private network (hereinafter referred to as "private network device") accesses a public network, the communication device sends an IP data packet to a NAT gateway that performs NAT. A header of the IP data packet includes a peer IP address and peer port number information of a communication device at a receiving end of the IP data packet, and includes a local IP address and local port number information of the communication device at a transmitting end of the IP data packet. After receiving the IP data packet, the NAT gateway replaces the local IP address in the packet header with a public network IP address of the NAT gateway, replaces the local port number in the packet header with a port number of an idle port of the NAT gateway, and records a mapping relationship between local IP address, local port number, public network IP address, and port number of the idle port, that is, a mapping relationship between (local IP address + local port number) and (public network IP address + port number of the idle port). The mapping relationship is called a port mapping relationship and is used for subsequent forwarding of the IP data packet. When receiving an IP data packet sent by a public network device through the idle port, the NAT gateway replaces the public network IP address of the NAT gateway in a header of the IP data packet with the local IP address, and replaces the port number of the idle port with the local port number, according to the recorded mapping relationship information, and then forwards the IP data packet to the private network device, thereby implementing communication between the private network and the public network. When the communication connection between the private network device and the NAT gateway is broken off, the NAT gateway releases the idle port allocated to the connection, so that a subsequent connection can use the idle port. In the foregoing process, the port mapping relationship triggered by the sending of the data packet by the private network device is called dynamic port mapping.

Moreover, a configuration technician may manually configure a fixed port on the NAT gateway, where the fixed port corresponds to a specific IP address and port in the private network. In this way, a data packet received by the fixed port will be forwarded to the specific IP address and port in the private network. No matter whether a communication device corresponding to the specific IP address and port in the private network is connected to the NAT gateway, the mapping relationship between (IP address + fixed port) of the NAT gateway and (specific IP address + port) of the private network always exists. Therefore, the port mapping relationship configured manually by the configuration technician is called static port mapping. Under the static port mapping, the communication device in the public network can access the corresponding communication device in the private network actively through the fixed port on the NAT gateway. For example, a world wide web (World Wide Web, WWW) server may be set up on a communication device in the private network. Based on the static port mapping between the fixed port on the NAT gateway and IP address + port of the WWW server, Internet users can access network resources on the WWW server by inputting the fixed port number on the NAT gateway. In addition, the static port mapping technology may also be used to configure a virtual server, and a demilitarized zone (Demilitarized Zone, DMZ) host, etc.

At the time of configuring a static port mapping relationship, it is necessary to specify a public network port, a private network IP address, and a private network port. However, in practical networking application, the NAT gateway generally also serves as a dynamic host configuration protocol (Dynamic Host Configuration Protocol, DHCP) server, and allocates a private network IP address to a private network device dynamically by a DHCP protocol. The private network IP address is uncertain. At this time, if the static port mapping relationship needs to be configured, before configuring the static port mapping relationship, the configuration technician has to wait until the process of dynamically allocating the private network IP address is completed, and query the private network IP address allocated to the communication device in the private network. The configuration technician cannot pre-configure the static port mapping relationship. Moreover, once the private network IP address allocated to the communication device in the private network changes, the configuration technician needs to reconfigure the static port mapping relationship based on a newly allocated private network IP address.

To avoid the problem that the configuration technician cannot pre-configure the static port mapping relationship, and needs to reconfigure the static port mapping relationship after the private network IP address changes, in the prior art, the configuration technician configures a static private network IP address for the private network device manually. Because the static private network IP address is fixed, the configuration technician can pre-configure the static port mapping relationship, rather than having to wait until the process of dynamically allocating the private network IP address by the DHCP protocol is completed before the static port mapping relationship is configured. Moreover, the static port mapping relationship will never change, so the configuration technician does not need to reconfigure the static port mapping relationship.

However, the method for configuring the static private network IP address manually has at least the following problems.

At the time of configuring the static private network IP address, the configuration technician needs to manually configure various types of network information on the private network device, including: a static IP address, a subnet mask, a default gateway IP address, and IP addresses of a preferred domain name server (Domain Name Server, DNS) and a standby DNS. The configuration workload is huge. Especially, when many private network devices exist in the private network, massive human resources and work time are occupied, and the configuration efficiency is low. Moreover, when the static private network IP address is configured for the private network device manually, configuration errors or repeated configuration tend to occur, which leads to IP address error, IP address conflict, disconnection of communication services accessing the public network, and so on, so that the communication services cannot be performed normally. In this case, it is necessary to detect errors of the configured network information one by one. Especially, when many private network devices exist in the private network, the workload is huge, and massive human resources and work time are occupied, which affects the normal communication service.

### SUMMARY OF THE INVENTION

The technical problems intended to be solved by embodiments of the present invention are to provide a static port mapping method and apparatus, a network address translation gateway, and a communication system, through which manual configuration work in a static port mapping relationship can be performed without waiting until a process of allocating a private network IP address dynamically is completed, the workload of manual configuration and the probability of erroneous or repeated configuration is lowered, and the manual configuration work in the static port mapping relationship does not need to be performed again after the private network IP address changes.

A port mapping method provided in an embodiment of the present invention includes:
obtaining static port mapping information;
where the static port mapping information includes a corresponding relationship between a public network port number, a dynamic host configuration protocol DHCP client identifier, and a private network port number, where the DHCP client identifier is an identifier that is carried in a DHCP extension attribute DHCP option field and uniquely identifies a private network device serving as a DHCP client;
obtaining a corresponding relationship between the DHCP client identifier and a private network IP address;
obtaining a public network Internet Protocol IP address of a network address translation NAT gateway; and
establishing a port mapping relationship between the public network port number, the public network IP address of the NAT gateway, the private network port number and the private network IP address according to the obtained corresponding relationship between the public network port number, the DHCP client identifier and the private network port number, the corresponding relationship between the DHCP client identifier and the private network IP address and the public network IP address of the NAT gateway.

A port mapping apparatus provided in an embodiment of the present invention includes:
a first obtaining module, configured to obtain static port mapping information;
where the static port mapping information includes a corresponding relationship between a public network port number, a dynamic host configuration protocol DHCP client identifier, and a private network port number, where the DHCP client identifier is an identifier that is carried in a DHCP extension attribute DHCP option field and uniquely identifies a private network device serving as a DHCP client;
a second obtaining module, configured to obtain a corresponding relationship between the DHCP client identifier and a private network IP address;
a third obtaining module, configured to obtain a public network Internet Protocol IP address of a network address translation NAT gateway; and
a mapping relationship establishment module, configured to establish a port mapping relationship between the public network port number + the public network IP address of the NAT gateway and the private network IP address + the private network port number according to the obtained corresponding relationship between the public network port number, the DHCP client identifier, and the private network port number, the corresponding relationship between the DHCP client identifier and the private network IP address, and the public network IP address of the NAT gateway.

A communication system provided in an embodiment of the present invention includes a NAT gateway, a DHCP server, and at least two private network devices.

The DHCP server is configured to: receive an IP address obtaining request sent by the private network device, and allocate a private network IP address to the private network device, where the IP address obtaining request carries a DHCP client identifier, and the DHCP client identifier is an identifier that is carried in a DHCP extension attribute DHCP option field and uniquely identifies the private network device serving as a DHCP client; and establish a corresponding relationship between the DHCP client identifier and the private network IP address.

The NAT gateway is configured to: store a public network IP address of the NAT gateway; receive static port mapping information, where the static port mapping information includes a corresponding relationship between a public network port number, a current DHCP client identifier, and a private network port number; obtain the corresponding relationship between the DHCP client identifier and the private network IP address from the DHCP server; establish and store a port mapping relationship between the public network port number + the public network IP address of the NAT gateway and the private network port number + the private network IP address according to the corresponding relationship between the DHCP client identifier and the private network IP address and obtained from the DHCP server, the public network IP address of the NAT gateway, and the received corresponding relationship between the public network port number, the DHCP client identifier, and the private network port number; when receiving an IP data packet sent by a public network, modify the public network port number in the IP data packet to the private network port number and modify the public network IP address to the private network IP address according to the established port mapping relationship, and then send the IP data packet to the private network device; and when receiving an IP data packet sent by a private network, modify the private network port number in the IP data packet to the public network port number and modify the private network IP address to the public network IP address according to the port mapping relationship, and send the IP data packet to a corresponding device in the public network.

Another communication system provided in an embodiment of the present invention includes a NAT gateway, a DHCP server, and at least two private network devices.

The DHCP server is configured to: receive an IP address obtaining request sent by the private network device, and allocate a private network IP address to the private network device, where the IP address obtaining request carries a DHCP client identifier, and the DHCP client identifier is an identifier that is carried in a DHCP extension attribute DHCP option field and uniquely identifies the private network device serving as a DHCP client; establish a corresponding relationship between the DHCP client identifier and the private network IP address; obtain static port mapping information from the NAT gateway, where the static port mapping information includes a corresponding relationship between a public network port number, a current DHCP client identifier, and a private network port number; obtain a public network IP address of the NAT gateway; establish a port mapping relationship between the public network port number + the public network IP address of the NAT gateway and the private network port number + the private network IP address according to the obtained public network IP address of the NAT gateway, the corresponding relationship between the DHCP client identifier and the private network IP address, and the corresponding relationship between the public network port number, the current DHCP client identifier, and the private network port number; and send the established port mapping relationship to the NAT gateway.

The NAT gateway is configured to: receive the static port mapping information, where the static port mapping information includes the corresponding relationship between the public network port number, the current DHCP client identifier, and the private network port number; provide the static port mapping information to the DHCP server; provide the public network IP address of the NAT gateway to the DHCP server; receive and store the port mapping relationship sent by the DHCP server; and perform network address translation on received data according to the port mapping relationship.

Through the static port mapping method and apparatus, and also the communication system provided in the embodiments of the present invention, the static port mapping information may be configured manually. The static port mapping information includes the corresponding relationship between the DHCP client identifier of the private network device, the public network port number of the NAT gateway, and the private network port number of the private network device. Because the use of the private network IP address of the private network device is not required, the manual configuration work in the port mapping relationship may be carried out at anytime without having to wait until a process of allocating the private network IP address dynamically is completed. After the private network IP address allocated to the private network device based on the DHCP client identifier of the private network device is obtained, the port mapping relationship can be established according to the public network IP address of the NAT gateway, the private network IP address corresponding to the DHCP client identifier. Because merely the corresponding relationship between the DHCP client identifier of the private network device, the public network port number of the NAT gateway, and the private network port number of the private network device needs to be manually configured, compared with the prior art, the manual configuration workload is reduced and the human resources are saved. Because the static private network IP address does not need to be manually configured, compared with the prior art, the probability of erroneous or repeated configuration is lowered, thereby avoiding the fault of communication service disconnection, and ensuring the normal progress of the communication services. Because the static port mapping information configured manually is independent of the private network IP address, compared with the prior art, the manual configuration work in the port mapping relationship does not need to be performed again after the private network IP address changes, which saves human resources significantly.

The technical solutions of the present invention are further detailed below with reference to accompanying drawings and embodiments.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description only show some embodiments of the present invention, and persons of ordinary skill in the art can derive other drawings from the accompanying drawings without creative efforts.

FIG. 1 is a network architecture diagram according to an embodiment of the present invention;

FIG. 2 is a flowchart of a port mapping method according to another embodiment of the present invention;

FIG. 3 is a flowchart of a port mapping method according to another embodiment of the present invention;

FIG. 4 is a schematic structural diagram of a port mapping apparatus according to an embodiment of the present invention;

FIG. 5 is a schematic structural diagram of a port mapping apparatus according to another embodiment of the present invention; and

FIG. 6 is a schematic structural diagram of a port mapping apparatus according to another embodiment of the present invention.

### DETAILED DESCRIPTION OF THE EMBODIMENTS

The technical solutions according to the embodiments of the present invention will be clearly and completely described in the following with reference to the accompanying drawings in the embodiments of the present invention. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

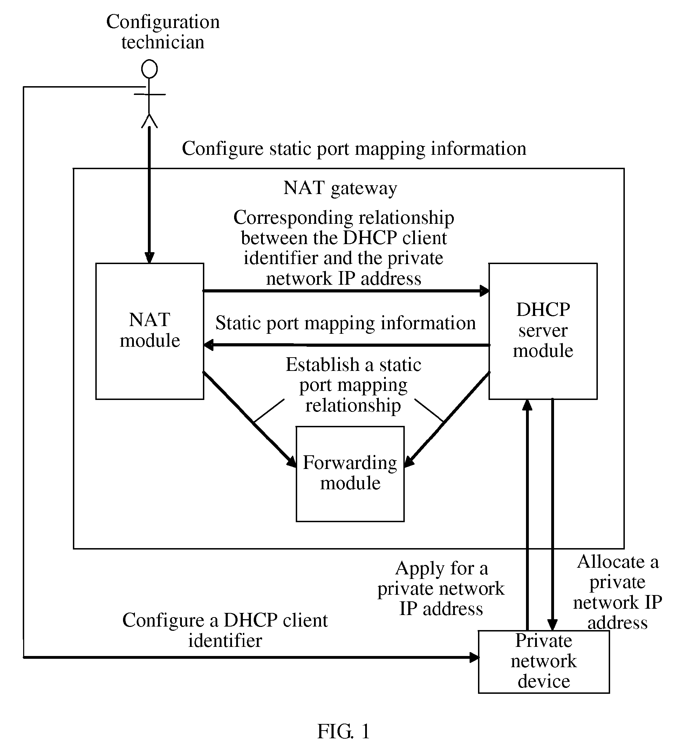

FIG. 1 is a network architecture diagram according to an embodiment of the present invention. As shown in FIG. 1, the network architecture includes a NAT gateway and a private network device. A configuration technician specifies: for the NAT gateway, a public network port number, a DHCP client identifier of the private network device and a private network port number, and configures static port mapping information. The DHCP client identifier is configured for the private network device. The private network device writes the configured DHCP client identifier into a DHCP protocol packet, and applies to a DHCP server module in the NAT gateway for a private network IP address through the DHCP protocol. The NAT gateway allocates a private network IP address to the private network device through the DHCP protocol, and obtains a corresponding relationship between the DHCP client identifier and the private network IP address. A NAT module or the DHCP server module establishes a port mapping relationship based on the static port mapping information, a public network IP address of the NAT gateway, and the corresponding relationship between the DHCP client identifier and the private network IP address, so that a forwarding module forwards an IP data packet between a public network and a private network according to the port mapping relationship.

A port mapping method provided in an embodiment of the present invention includes the following process.

Step 101: Obtain static port mapping information.

The static port mapping information includes a corresponding relationship between a public network port number, a DHCP client identifier, and a private network port number. Generally, the static port mapping information is configured by a configuration technician onto a NAT gateway. The DHCP client identifier is an identifier that is carried in a DHCP extension attribute DHCP option field and uniquely identifies a private network device serving as a DHCP client.

Step 102: Obtain a corresponding relationship between the DHCP client identifier carried in the DHCP option field and a private network IP address.

Step 103: Obtain a public network Internet Protocol IP address of the network address translation NAT gateway.

Step 104: Establish a port mapping relationship between the public network port number + the public network IP address of the NAT gateway and the private network port number + the private network IP address according to the obtained corresponding relationship between the public network port number, the DHCP client identifier, and the private network port number, the corresponding relationship between the DHCP client identifier and the private network IP address, and the public network Internet Protocol IP address of the NAT gateway.

Through the port mapping method provided in the foregoing embodiment of the present invention, the static port mapping information may be configured manually. Because the use of the private network IP address of the private network device is not required, the manual configuration work in the port mapping relationship may be carried out at anytime without having to wait until a process of allocating the private network IP address dynamically is completed; and the port mapping relationship is established according to the public network IP address of the NAT gateway, the static port mapping information, and the corresponding relationship between the DHCP client identifier and the private network IP address. Because merely the corresponding relationship between the DHCP client identifier of the private network device, the public network port number of the NAT gateway, and the private network port number of the private network device needs to be manually configured, the manual configuration workload is reduced and the human resources are saved. Because the static private network IP address does not need to be manually configured, the probability of erroneous or repeated configuration is lowered, thereby avoiding the fault of communication service disconnection, and ensuring the normal progress of the communication services. Because the static port mapping information configured manually is independent of the private network IP address, the manual configuration work in the port mapping relationship does not need to be performed again after the private network IP address changes, which saves human resources significantly.

As specified by network protocol standards, the DHCP supports many extension attributes (Options). Through the extension attributes, each vendor can extend application functions of the DHCP to complete a specific work. For example, the DHCP option is used as a channel for transmitting control information by carrying personal information and location information of users in the DHCP option field. Therefore, as an example in the present invention, the DHCP client identifier is expressed by the DHCP option field.

For example, as specified by the network protocol standard RFC2132, the DHCP option60 field in the DHCP option field is a string field in a DHCP packet sent by a DHCP client to a DHCP server, and is set as a vendor-defined attribute field in RFC2132. Each vendor determines the contents and implementation functions of the DHCP option60 field to be used. In an embodiment of the present invention, the DHCP option60 field in the DHCP option field serves as the DHCP client identifier; the DHCP option60 field includes identification information that uniquely identifies a DHCP client, such as device name, device type, device model, and device version. For example, if RG8245 V100R002 is used as the DHCP client identifier, the corresponding DHCP option60 field is written as RG8245 V100R002, and the DHCP server can distinguish the DHCP client according to the field.

As another example, as specified by the network protocol standard RFC3925, the DHCP option125 field in the DHCP option field is a string set field in a DHCP packet sent by a DHCP client to a DHCP server, and is set as a vendor-defined attribute field in RFC3925. The string set field DHCP option125 may be specifically composed of multiple string fields, and each vendor determines the content and implementation functions of the DHCP option125 field to be used. In another embodiment of the present invention, the DHCP option125 field in the DHCP option field serves as the DHCP client identifier. Specifically, any one or more string fields that make up the DHCP option125 field may include identification information that uniquely identifies a DHCP client, such as device name, device type, device model, and device version. The DHCP server can distinguish the DHCP client according to the field.

If the DHCP option field is used to express the DHCP client identifier, idle fields in the DHCP are fully utilized without changing the existing protocol standard.

The port mapping method in this embodiment may further include storing, by the private network device, the manually configured DHCP client identifier.

Moreover, the port mapping method in this embodiment may further include: after manually specifying the public network port number, the DHCP client identifier, and the private network port number, configuring, by a user, the public network port number, the DHCP client identifier, and the private network port number into the static port mapping information; and storing, by the NAT gateway, the static port mapping information configured by the user.

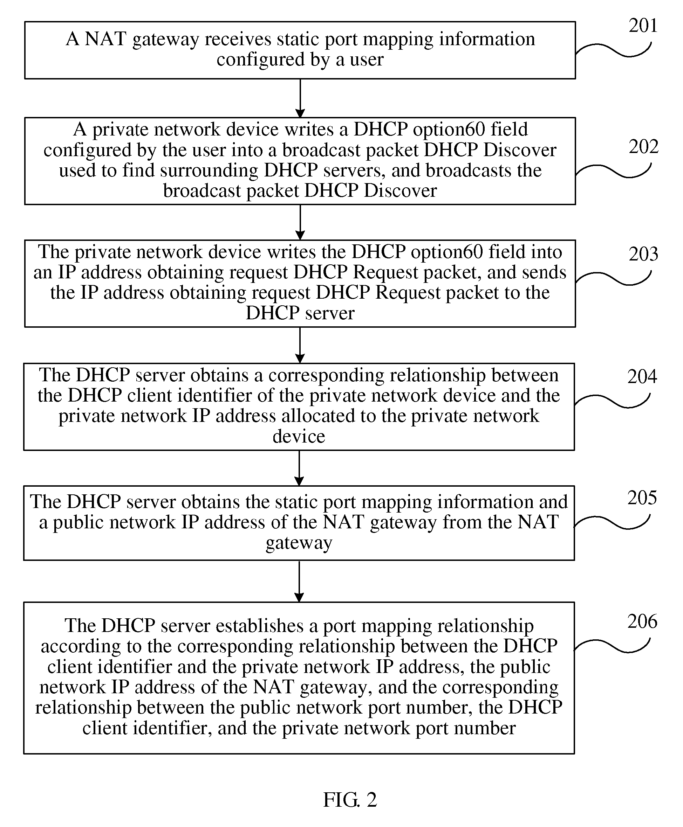

FIG. 2 is a flowchart of a port mapping method according to another embodiment of the present invention. In this embodiment, a DHCP server establishes a port mapping relationship. As shown in FIG. 2, the method in this embodiment includes the following process.

Step 201: A NAT gateway receives static port mapping information configured by a configuration technician, where the static port mapping information includes a corresponding relationship between a public network port number, a DHCP client identifier, and a private network port number. The DHCP client identifier is an identifier that is carried in a DHCP option field and uniquely identifies a private network device serving as a DHCP client.

Step 202: A private network device broadcasts a broadcast packet DHCP Discover when the private network device applies for a private network IP address through a DHCP packet. The broadcast packet DHCP Discover may include the DHCP option field that uniquely identifies the private network device as a DHCP client.

Step 203: After receiving a reply packet DHCP Offer returned by a DHCP server in response to the broadcast packet DHCP Discover, the private network device writes a DHCP option60 field configured by a user into an IP address obtaining request DHCP Request packet, and sends the IP address obtaining request DHCP Request packet to the DHCP server according to a DHCP server address in the reply packet DHCP Offer.

Step 204: The DHCP server allocates a private network IP address to the private network device, and obtains a corresponding relationship between the DHCP client identifier of the private network device and the private network IP address allocated to the private network device.

As another example in the present invention, the operation of allocating the private network IP address to the private network device through steps 202-204 may also be performed in parallel with the operation of configuring the static port mapping information through step 201, or performed before the operation of configuring the static port mapping information through step 201.

The DHCP server may return an acknowledgement packet DHCP ACK to the private network device after allocating the private network IP address to the private network device.

Step 205: The DHCP server obtains the static port mapping information and a public network IP address of the NAT gateway from the NAT gateway. In practical application, the DHCP server may exchange information with the NAT gateway specifically by using the user datagram protocol (User Datagram Protocol, UDP) or other existing protocols, to obtain the static port mapping information and the public network IP address of the NAT gateway from the NAT gateway.

If the static port mapping information that includes the current DHCP client identifier is not configured in the NAT gateway, subsequent process in this embodiment may not be performed.

Step 206: The DHCP server establishes a port mapping relationship between the public network port number + the public network IP address of the NAT gateway and the private network port number + the private network IP address according to the corresponding relationship between the DHCP client identifier and the private network IP address, the public network IP address of the NAT gateway, and the corresponding relationship between the public network port number, the DHCP client identifier, and the private network port number.

For example, the public network IP address of the NAT gateway is 10.100.100.1. If the DHCP client identifier of the private network is configured to be RG8245 V100R002 in step 201, the public network port number is specified to be 1, the private network port number is specified to be 4, and the private network IP address allocated by the DHCP server to the private network device in step 204 is 200.100.100.1, the static port mapping information obtained by the NAT in step 201 is as shown in Table 1.

**Table 1. Static port mapping information**

| Public network port number | DHCP client identifier | Private network port number |
|---|---|---|
| 1 | RG8245 V100R002 | 4 |

Table 2 shows the corresponding relationship between the DHCP client identifier of the private network device and the private network IP address, which is obtained in step 204.

**Table 2**

| DHCP client identifier | Private network IP address |
|---|---|
| RG8245 V100R002 | 200.100.100.1 |

Table 3 specifically shows the port mapping relationship established in step 206.

**Table 3 Port mapping relationship**

| Public network IP address | Public network port number | Private network IP address | Private network port number |
|---|---|---|---|
| 10.100.100.1 | 1 | 200.100.100.1 | 4 |

After establishing the port mapping relationship, the DHCP server sends the port mapping relationship to the NAT gateway for storage, so that the NAT gateway performs forwarding processing on a received IP data packet according to the port mapping relationship, for example, modifies the public network port number in an IP data packet sent by a public network to the private network port number, modifies the public network IP address to the private network IP address, and sends the IP data packet to the private network device; and modifies the private network port number in an IP data packet sent by a private network to the public network port number, modifies the private network IP address to the public network IP address, and sends the IP data packet to a corresponding device in the public network.

In the embodiment of the present invention shown in FIG. 2, description is made with reference to an example in which the DHCP client identifier is expressed by the DHCP option60 field. In the case that the DHCP client identifier is expressed in other forms or by other DHCP option fields such as DHCP option125 field, the method is still applicable, and only the DHCP option60 field needs to be replaced with other forms of DHCP client identifiers or other DHCP option fields.

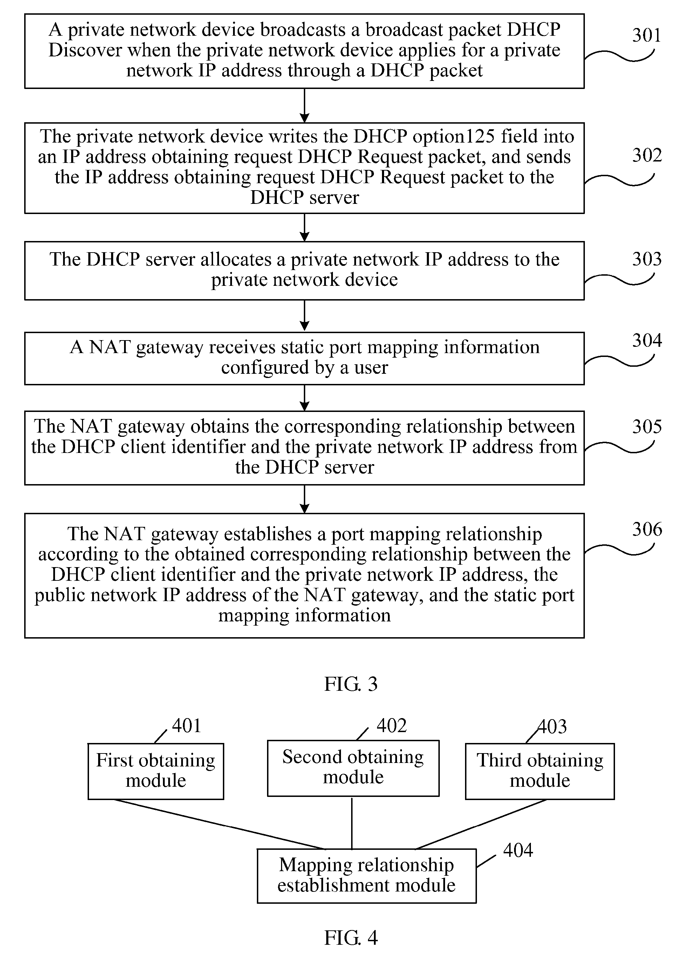

FIG. 3 is a flowchart of a port mapping method according to another embodiment of the present invention. In this embodiment, a NAT gateway establishes a port mapping relationship. As shown in FIG. 3, the method in this embodiment includes the following process.

Step 301: A private network device broadcasts a broadcast packet DHCP Discover when the private network device applies for a private network IP address through a DHCP packet. A DHCP option125 field, which is configured by a user and can uniquely identify the private network device as a DHCP client, may be written into the broadcast packet DHCP Discover that is used to find surrounding DHCP servers.

Step 302: After receiving a reply packet DHCP Offer returned by a DHCP server in response to the broadcast packet DHCP Discover, the private network device writes the DHCP option125 field configured by the user into an IP address obtaining request DHCP Request packet, and sends the IP address obtaining request DHCP Request packet to the DHCP server according to a DHCP server address in the reply packet DHCP Offer.

Step 303: The DHCP server allocates a private network IP address to the private network device, and obtains a corresponding relationship between a DHCP client identifier of the private network device and the private network IP address of the private network device. The DHCP client identifier is an identifier that is carried in a DHCP option field and uniquely identifies the private network device serving as a DHCP client.

The DHCP server may return an acknowledgement packet DHCP ACK to the private network device after allocating the private network IP address to the private network device.

Step 304: A NAT gateway receives static port mapping information configured by a configuration technician, where the static port mapping information includes a corresponding relationship between a public network port number, the DHCP client identifier, and a private network port number.

As another example in the present invention, the operation of configuring the static port mapping information through 304 may be performed in parallel with the operation of allocating the private network IP address to the private network device through step 301-step 303, or performed before steps 301-303.

Step 305: The NAT gateway obtains the corresponding relationship between the DHCP client identifier and the private network IP address from the DHCP server. In practical application, the NAT gateway may exchange information with the DHCP server specifically by using the user datagram protocol (User Datagram Protocol, UDP) or other existing protocols, to obtain the corresponding relationship between the DHCP client identifier and the private network IP address from the DHCP server.

If the DHCP server has not allocated the private network IP address to the private network device, subsequent process of this embodiment may not be performed.

Step 306: The NAT gateway establishes a port mapping relationship between the public network port number + the public network IP address of the NAT gateway and the private network port number + the private network IP address according to the obtained corresponding relationship between the DHCP client identifier and the private network IP address, the public network IP address of the NAT gateway, and the corresponding relationship between the public network port number, the DHCP client identifier, and the private network port number.

After establishing the port mapping relationship, the NAT gateway stores the port mapping relationship so that the NAT gateway can perform subsequent forwarding processing on a received IP data packet according to the port mapping relationship, for example, modifies the public network port number in an IP data packet sent by a public network to the private network port number, modifies the public network IP address to the private network IP address, and sends the IP data packet to the private network device; and modifies the private network port number in an IP data packet sent by a private network to the public network port number, modifies the private network IP address to the public network IP address, and sends the IP data packet to a corresponding device in the public network.

In the embodiment shown in FIG. 3, description is made with reference to an example in which the DHCP client identifier is expressed by the DHCP option125 field. In the case that the DHCP client identifier is expressed in other forms or by other DHCP option fields such as DHCP option60 field, the method is still applicable, and only the DHCP option125 field needs to be replaced with other forms of DHCP client identifiers or other DHCP option fields.

FIG. 4 is a schematic structural diagram of a port mapping apparatus according to an embodiment of the present invention. The port mapping apparatus in this embodiment may be used to implement the port mapping method in the preceding embodiments of the present invention. As shown in FIG. 4, the static port mapping apparatus in this embodiment includes a first obtaining module 401, a second obtaining module 402, a third obtaining module 403, and a mapping relationship establishment module 404.

The first obtaining module 401 is configured to obtain static port mapping information, where the static port mapping information includes a corresponding relationship between a public network port number, a DHCP client identifier, and a private network port number, and the DHCP client identifier is an identifier that is carried in a DHCP option field and uniquely identifies a private network device serving as a DHCP client.

The second obtaining module 402 is configured to obtain a corresponding relationship between the DHCP client identifier and a private network IP address. The third obtaining module 403 is configured to obtain a public network Internet Protocol IP address of a NAT gateway.

The mapping relationship establishment module 404 is configured to establish a port mapping relationship between the public network port number + the public network IP address of the NAT gateway and the private network port number + the private network IP address according to the obtained public network IP address of the NAT gateway, the corresponding relationship between the DHCP client identifier and the private network IP address, and the obtained static port mapping information.

Through the port mapping apparatus provided in the foregoing embodiment of the present invention, it is not necessary to specify the private network IP address of the private network device in the static port mapping information that needs to be configured manually. Therefore, the manual configuration work in the port mapping relationship may be carried out at anytime without having to wait until a process of allocating the private network IP address dynamically is completed. The port mapping relationship is established according to the public network IP address of the NAT gateway, the corresponding relationship between the DHCP client identifier and the private network IP address, and the static port mapping information. Because merely the corresponding relationship between the DHCP client identifier of the private network device, the public network port number of the NAT gateway, and the private network port number of the private network device needs to be manually configured, the manual configuration workload is reduced and the human resources are saved. Because the static private network IP address does not need to be manually configured, the probability of erroneous or repeated configuration is lowered, thereby avoiding the fault of communication service disconnection, and ensuring the normal progress of the communication services. Because the static port mapping information configured manually is independent of the private network IP address, the manual configuration work in the port mapping relationship does not need to be performed again after the private network IP address changes, which saves human resources significantly.

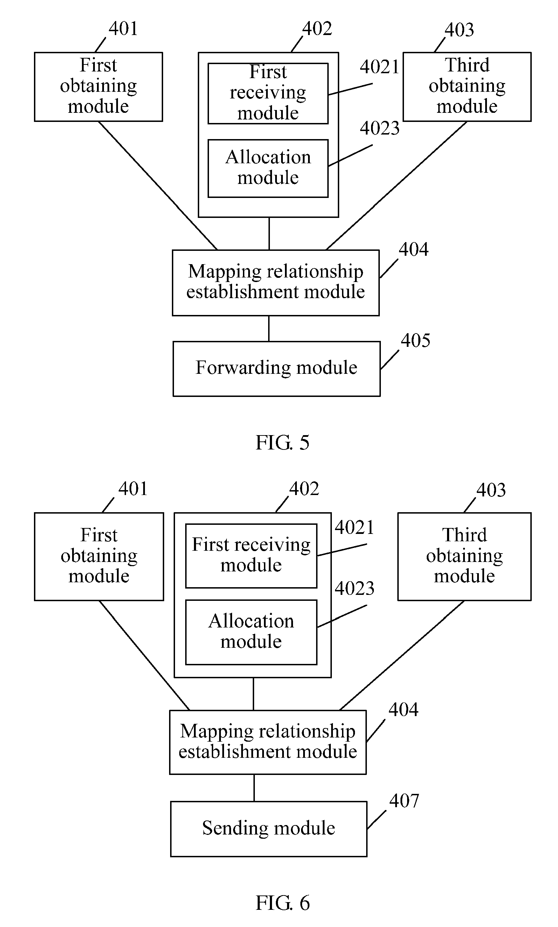

FIG. 5 is a schematic structural diagram of a port mapping apparatus according to another embodiment of the present invention. Compared with the embodiment shown in FIG. 4, the second obtaining module 402 in the port mapping apparatus according to this embodiment may be implemented through two solutions below.

1: The second obtaining module 402 may specifically include: a first receiving module 4021, configured to receive an IP address obtaining request IP request sent by the private network device, where the IP address obtaining request carries a DHCP client identifier, and the DHCP client identifier is an identifier that is carried in a DHCP option field and uniquely identifies the private network device serving as a DHCP client; and an allocation module 4023, configured to allocate a private network IP address to the private network device when the first receiving module 4021 receives the IP address obtaining request from the private network device, and establish a corresponding relationship between the DHCP client identifier and the private network IP address.

2: The second obtaining module 402 may also be configured to obtain the corresponding relationship between the DHCP client identifier and the private network IP address from a device other than the port mapping apparatus.

The port mapping apparatus in this embodiment further includes a forwarding module 405, configured to perform, according to the port mapping relationship established by the mapping relationship establishment module 404, network address translation NAT on received data, namely, modify the public network port number in an IP data packet sent by a public network to the private network port number, modify the public network IP address to the private network IP address, and send the IP data packet to the private network device; and modify the private network port number in an IP data packet sent by a private network to the public network port number, modify the private network IP address to the public network IP address, and send the IP data packet to a corresponding device in the public network. The port mapping apparatus in this embodiment may be a NAT gateway device.

Through the port mapping apparatus provided in the embodiment of the present invention, it is not necessary to specify the private network IP address of the private network device in the static port mapping information that needs to be configured manually. Therefore, the manual configuration work in the port mapping relationship may be carried out at anytime without having to wait until a process of allocating the private network IP address dynamically is completed. Because merely the corresponding relationship between the DHCP client identifier of the private network device, the public network port number of the NAT gateway, and the private network port number of the private network device needs to be manually configured, the manual configuration workload is reduced and the human resources are saved. Because the static private network IP address does not need to be manually configured, the probability of erroneous or replicated configuration is lowered, thereby avoiding the fault of communication service disconnection, and ensuring the normal progress of the communication services. Because the static port mapping information configured manually is independent of the private network IP address, the manual configuration work in the port mapping relationship does not need to be performed again after the private network IP address changes, which saves human resources significantly.

FIG. 6 is a schematic structural diagram of a port mapping apparatus according to another embodiment of the present invention. Compared with the embodiment shown in FIG. 4, the second obtaining module 402 in this embodiment specifically includes: a first receiving module 4021, configured to receive an IP address obtaining request IP request sent by the private network device, where the IP address obtaining request carries a DHCP client identifier that uniquely identifies the private network device; and an allocation module 4023, which is configured to allocate a private network IP address to the private network device when the first receiving module 4021 receives the IP address obtaining request from the private network device, and establish a corresponding relationship between the DHCP client identifier and the private network IP address.

This embodiment may further include a sending module 407, configured to send the port mapping relationship established by the mapping relationship establishment module 404 to the NAT gateway, so that the NAT gateway can perform network address translation NAT on received data according to the port mapping relationship.

Specifically, the port mapping apparatus in this embodiment may be a dynamic host configuration protocol DHCP server.

Through the DHCP server provided in the embodiment of the present invention, it is not necessary to specify the private network IP address of the private network device in the static port mapping information that needs to be configured manually. Therefore, the manual configuration work in the static port mapping relationship may be carried out at anytime without having to wait until a process of allocating the private network IP address dynamically is completed. Because merely the corresponding relationship between the DHCP client identifier of the private network device, the public network port number of the NAT gateway, and the private network port number of the private network device needs to be manually configured, the manual configuration workload is reduced and the human resources are saved. Because the static private network IP address does not need to be manually configured, the probability of erroneous or replicated configuration is lowered, thereby avoiding the fault of communication service disconnection, and ensuring the normal progress of the communication services. Because the static port mapping information configured manually is independent of the private network IP address, the manual configuration work in the port mapping relationship does not need to be performed again after the private network IP address changes, which saves human resources significantly.

In addition, in the port mapping apparatus according to the embodiment of the present invention, the DHCP extension attribute option field may be a DHCP option60 field, a DHCP option125 field, or other DHCP option fields.

A communication system provided in an embodiment of the present invention can be used to implement the process of the static port mapping method in the embodiment shown in FIG. 3 of the present invention, and includes a NAT gateway, a DHCP server, and at least two private network devices. The DHCP server is configured to: receive an IP address obtaining request sent by the private network device, allocate a private network IP address to the private network device, and establish a corresponding relationship between a DHCP client identifier and the private network IP address, where the IP address obtaining request carries the DHCP client identifier that uniquely identifies the private network device.

Correspondingly, the NAT gateway is configured to: store a public network IP address of the NAT gateway; receive configured static port mapping information, where the static port mapping information includes a corresponding relationship between a public network port number, a current DHCP client identifier, and a private network port number; obtain the corresponding relationship between the DHCP client identifier and the private network IP address from the DHCP server; establish and store a port mapping relationship between the public network port number + the public network IP address of the NAT gateway and the private network port number + the private network IP address according to the corresponding relationship between the DHCP client identifier and the private network IP address obtained from the DHCP server, the public network IP address of the NAT gateway, and the static port mapping information; when receiving an IP data packet sent by a public network, modify the public network port number in the received IP data packet to the private network port number and modify the public network IP address to the private network IP address according to the established port mapping relationship, and then send the IP data packet to the private network device; and when receiving an IP data packet sent by a private network, modify the private network port number in the IP data packet to the public network port number and modify the private network IP address to the public network IP address according to the port mapping relationship, and send IP data packet to a corresponding device in the public network.

Another communication system provided in an embodiment of the present invention can be used to implement the process of the static port mapping method in the embodiment shown in FIG. 2 of the present invention, and includes a NAT gateway, a DHCP server, and at least two private network devices. The DHCP server is configured to: receive an IP address obtaining request sent by the private network device, and allocate a private network IP address to the private network device, where the IP address obtaining request includes a DHCP client identifier, the DHCP client identifier is an identifier that is carried in a DHCP extension attribute DHCP option field and uniquely identifies the private network device serving as a DHCP client; establish a corresponding relationship between the DHCP client identifier and the private network IP address; obtain static port mapping information from the NAT gateway, where the static port mapping information includes a corresponding relationship between a public network port number, a current DHCP client identifier, and a private network port number; obtain a public network IP address of the NAT gateway; establish a port mapping relationship between the public network port number + the public network IP address of the NAT gateway and the private network port number + the private network IP address according to the obtained public network IP address of the NAT gateway, the corresponding relationship between the DHCP client identifier and the private network IP address, and the corresponding relationship between the public network port number, the current DHCP client identifier, and the private network port number; and send the established port mapping relationship to the NAT gateway.

The NAT gateway is configured to: receive the static port mapping information, where the static port mapping information includes the corresponding relationship between the public network port number, the current DHCP client identifier, and the private network port number; provide the static port mapping information to the DHCP server; provide the public network IP address of the NAT gateway to the DHCP server; receive and store the port mapping relationship sent by the DHCP server; and perform network address translation on received data according to the port mapping relationship.

Through the communication system provided in the embodiment of the present invention, it is not necessary to specify the private network IP address of the private network device in the static port mapping information that needs to be configured manually. Therefore, the manual configuration work in the port mapping relationship may be carried out at anytime without having to wait until a process of allocating the private network IP address dynamically is completed; and the port mapping relationship is established according to the public network IP address of the NAT gateway, the corresponding relationship between the DHCP client identifier and the private network IP address, and the static port mapping information. Because merely the corresponding relationship between the DHCP client identifier of the private network device, the public network port number of the NAT gateway, and the private network port number of the private network device needs to be manually configured, the manual configuration workload is reduced and the human resources are saved. Because the static private network IP address does not need to be manually configured, the probability of erroneous or replicated configuration is lowered, thereby avoiding the fault of communication service disconnection, and ensuring the normal progress of the communication services. Because the static port mapping information configured manually is independent of the private network IP address, the manual configuration work in the port mapping relationship does not need to be performed again after the private network IP address changes, which saves human resources significantly.

In addition, as a specific embodiment of the present invention, the DHCP client identifier may be expressed by a DHCP option field. Specifically, the DHCP option field may be a DHCP option60 field, or a DHCP option125 field.

The embodiments in this specification are described in a progressive way, and each embodiment emphasizes its differences from other embodiments. The same or similar parts between the embodiments may be referred in one and another embodiments. The apparatus embodiment is basically the same as the method embodiment, and is therefore described briefly. For the relevant parts in the apparatus embodiment, see the corresponding description in the method embodiment.

Persons of ordinary skill in the art should understand that all or a part of the steps of the method according to the embodiments may be implemented by a program instructing relevant hardware. The program may be stored in a computer readable storage medium. When the program is run, the steps of the method according to the embodiments are performed. The storage medium includes any medium that is capable of storing program codes, such as a ROM, a RAM, a magnetic disk, or an optical disk.

Through the embodiments of the present invention, the manual configuration work in the port mapping relationship may be carried out at any time without having to wait until a process of allocating the private network IP address dynamically is completed. Therefore, the manual configuration workload is reduced, the human resources are saved, and the probability of erroneous or repeated configuration is lowered, thereby avoiding the fault of communication service disconnection, and ensuring the normal progress of the communication services.

The NAT gateway, the DHCP server, and the private network device involved in the present invention refer to a hardware device that includes at least a processor and an input/output unit.

The description in the present invention is given for the purpose of exemplification and description, and is not intended to be exhaustive or to limit the invention to the forms disclosed. Various modifications and changes are apparent to persons of ordinary skill in the art. The embodiments are chosen and described for better illustrating the principles of the invention and its practical application, so that persons of ordinary skill in the art can understand the present invention and design various embodiments having a variety of modifications and suitable for particular uses.

## Claims

1. A port mapping method, comprising:
obtaining static port mapping information;
wherein the static port mapping information comprises a corresponding relationship between a public network port number, a dynamic host configuration protocol DHCP client identifier, and a private network port number, wherein the DHCP client identifier is an identifier that is carried in a DHCP extension attribute DHCP option field and uniquely identifies a private network device serving as a DHCP client;
obtaining a corresponding relationship between the DHCP client identifier and a private network IP address;
obtaining a public network Internet Protocol IP address of a network address translation NAT gateway; and
establishing a port mapping relationship between the public network port number + the public network IP address of the NAT gateway and the private network port number + the private network IP address according to the obtained corresponding relationship between the public network port number, the DHCP client identifier, and the private network port number, the corresponding relationship between the DHCP client identifier and the private network IP address, and the public network IP address of the NAT gateway.

2. The method according to claim 1, further comprising:
receiving and storing, by the NAT gateway, the static port mapping information; and receiving, by the private network device, the DHCP client identifier.

3. The method according to claim 1, wherein the obtaining the corresponding relationship between the DHCP client identifier and the private network IP address comprises: receiving, by a DHCP server, an IP address obtaining request sent by the private network device, wherein the IP address obtaining request carries the DHCP client identifier that uniquely identifies the private network device; and allocating, by the DHCP server, a private network IP address to the private network device, and obtaining the corresponding relationship between the DHCP client identifier and the private network IP address;
the obtaining the static port mapping information comprises: obtaining, by the DHCP server, the static port mapping information from the NAT gateway;
the obtaining the public network Internet Protocol IP address of the NAT gateway comprises: obtaining, by the DHCP server, the public network Internet Protocol IP address of the NAT gateway from the NAT gateway; and
the establishing the port mapping relationship comprises: establishing, by the DHCP server, the port mapping relationship between the public network port number + the public network IP address of the NAT gateway and the private network IP address + the private network port number according to the public network IP address of the NAT gateway, the corresponding relationship between the DHCP client identifier and the private network IP address, and the static port mapping information obtained from the NAT gateway.

4. The method according to claim 1, specifically comprising:
receiving, by the NAT gateway, the static port mapping information;
obtaining, by the NAT gateway, the corresponding relationship between the DHCP client identifier and the private network IP address from a DHCP server;
obtaining, by the NAT gateway, the public network Internet Protocol IP address of the NAT gateway; and
establishing, by the NAT gateway, the port mapping relationship between the public network port number + the public network IP address of the NAT gateway and the private network IP address + the private network port number according to the received corresponding relationship between the public network port number, the DHCP client identifier, and the private network port number, the corresponding relationship between the DHCP client identifier and the private network IP address and obtained from the DHCP server, and the public network IP address of the NAT gateway.

5. The method according to claim 1, specifically comprising:
receiving, by the NAT gateway, the static port mapping information;
obtaining, by the NAT gateway, the corresponding relationship between the DHCP client identifier and the private network IP address from a DHCP server unit of the NAT gateway;
obtaining, by the NAT gateway, the public network Internet Protocol IP address of the NAT gateway; and
establishing, by the NAT gateway, the port mapping relationship between the public network port number + the public network IP address of the NAT gateway and the private network IP address + the private network port number according to the received corresponding relationship between the public network port number, the DHCP client identifier, and the private network port number, the obtained corresponding relationship between the DHCP client identifier and the private network IP address, and the public network IP address of the NAT gateway.

6. The method according to claim 3, wherein the receiving, by the DHCP server, the IP address obtaining request sent by the private network device comprises:
receiving, by the DHCP server, the IP address obtaining request sent by the private network device through a DHCP Request packet, wherein the DHCP Request packet carries the DHCP client identifier.

7. The method according to any one of claims 1 to 6, wherein the DHCP extension attribute option field is specifically a DHCP option60 field or a DHCP option125 field.

8. A port mapping apparatus, comprising:
a first obtaining module, configured to obtain static port mapping information;
wherein the static port mapping information comprises a corresponding relationship between a public network port number, a dynamic host configuration protocol DHCP client identifier, and a private network port number, wherein the DHCP client identifier is an identifier that is carried in a DHCP extension attribute DHCP option field and uniquely identifies a private network device serving as a DHCP client;
a second obtaining module, configured to obtain a corresponding relationship between the DHCP client identifier and a private network IP address;
a third obtaining module, configured to obtain a public network Internet Protocol IP address of a network address translation NAT gateway; and
a mapping relationship establishment module, configured to establish a port mapping relationship between the public network port number+ the public network IP address of the NAT gateway and the private network port number + the private network IP address according to the obtained corresponding relationship between the public network port number, the DHCP client identifier, and the private network port number, the corresponding relationship between the DHCP client identifier and the private network IP address, and the public network IP address of the NAT gateway.

9. The apparatus according to claim 8, wherein the DHCP extension attribute option field comprises a DHCP option60 field and a DHCP option 125 field.

10. The apparatus according to claim 9, wherein the second obtaining module comprises:
a first receiving module, configured to receive an IP address obtaining request sent by the private network device, wherein the IP address obtaining request carries the DHCP client identifier; and
an allocation module, configured to allocate a private network IP address to the private network device when the first receiving module receives the IP address obtaining request, and obtain the corresponding relationship between the DHCP client identifier and the private network IP address.

11. The apparatus according to claim 10, further comprising:
a sending module, configured to send the port mapping relationship established by the mapping relationship establishment module to the NAT gateway.

12. The apparatus according to any one of claims 8 to 11, wherein the apparatus is specifically a dynamic host configuration protocol DHCP server.

13. The apparatus according to claim 8, further comprising:
a forwarding module, configured to perform network address translation NAT on received data according to the port mapping relationship established by the mapping relationship establishment module.

14. The apparatus according to any one of claims 8 to 11 or claim 13, wherein the apparatus is specifically the network address translation NAT gateway.

15. A communication system, comprising a NAT gateway, a DHCP server, and at least two private network devices, wherein:
the DHCP server is configured to: receive an IP address obtaining request sent by the private network device, and allocate a private network IP address to the private network device, wherein the IP address obtaining request carries a DHCP client identifier, and the DHCP client identifier is an identifier that is carried in a DHCP extension attribute DHCP option field and uniquely identifies the private network device serving as a DHCP client; and establish a corresponding relationship between the DHCP client identifier and the private network IP address; and
the NAT gateway is configured to: store a public network IP address of the NAT gateway; receive and store static port mapping information, wherein the static port mapping information comprises a corresponding relationship between a public network port number, a current DHCP client identifier, and a private network port number; obtain the corresponding relationship between the DHCP client identifier and the private network IP address from the DHCP server; establish a port mapping relationship between the public network port number + the public network IP address of the NAT gateway and the private network port number + the private network IP address according to the corresponding relationship between the DHCP client identifier and the private network IP address and obtained from the DHCP server, the public network IP address of the NAT gateway, and the received corresponding relationship between the public network port number, the DHCP client identifier, and the private network port number; when receiving an IP data packet sent by a public network, modify the public network port number in the IP data packet to the private network port number and modify the public network IP address to the private network IP address according to the established port mapping relationship, and then send the IP data packet to the private network device; and when receiving an IP data packet sent by a private network, modify the private network port number in the IP data packet to the public network port number and modify the private network IP address to the public network IP address according to the port mapping relationship, and then send the IP data packet to a corresponding device in the public network.

16. The system according to claim 15, wherein the DHCP extension attribute option field comprises a DHCP option60 field and a DHCP option125 field.

17. A communication system, comprising a NAT gateway, a DHCP server, and at least two private network devices, wherein:
the DHCP server is configured to: receive an IP address obtaining request sent by the private network device, and allocate a private network IP address to the private network device, wherein the IP address obtaining request carries a DHCP client identifier, and the DHCP client identifier is an identifier that is carried in a DHCP extension attribute DHCP option field and uniquely identifies the private network device serving as a DHCP client; establish a corresponding relationship between the DHCP client identifier and the private network IP address; obtain static port mapping information from the NAT gateway, wherein the static port mapping information comprises a corresponding relationship between a public network port number, a current DHCP client identifier, and a private network port number; obtain a public network IP address of the NAT gateway; establish a port mapping relationship between the public network port number + the public network IP address of the NAT gateway and the private network port number + the private network IP address according to the obtained public network IP address of the NAT gateway, the corresponding relationship between the DHCP client identifier and the private network IP address, and the corresponding relationship between the public network port number, the current DHCP client identifier, and the private network port number; and send the established port mapping relationship to the NAT gateway; and
the NAT gateway is configured to: receive and store the static port mapping information, wherein the static port mapping information comprises the corresponding relationship between the public network port number, the current DHCP client identifier, and the private network port number; provide the static port mapping information to the DHCP server; provide the public network IP address of the NAT gateway to the DHCP server; receive the port mapping relationship sent by the DHCP server; and perform network address translation on received data according to the port mapping relationship.

18. The system according to claim 17, wherein the DHCP extension attribute option field comprises a DHCP option60 field and a DHCP option 125 field.
